# EUROPEAN PATENT APPLICATION

(11) **EP 3 112 088 A1**
(43) Date of publication of application: **04.01.2017**
(21) Application number: 15754952.8
(22) Date of filing: 23.01.2015
(51) Int. Cl.: B25F 5/00, B23D 45/16, B23D 47/12, B24B 23/02, B27B 9/00, H02P 29/00

(54) **WORK TOOL**

(30) Priority: 28.02.2014 JP 2014039379
(71) Applicant: Hitachi Koki Co., Ltd., Tokyo 108-6020 (JP)
(72) Inventor: TAKANO, Nobuhiro, Hitachinaka-city Ibaraki 312-8502 (JP); KAWANO, Yoshikazu, Hitachinaka-city Ibaraki 312-8502 (JP); KOIZUMI, Toshiaki, Hitachinaka-city Ibaraki 312-8502 (JP); TANIMOTO, Hideyuki, Hitachinaka-city Ibaraki 312-8502 (JP); IWATA, Kazutaka, Hitachinaka-city Ibaraki 312-8502 (JP); USHIWATA, Shigeharu, Hitachinaka-city Ibaraki 312-8502 (JP)
(74) Representative: Parker, Andrew James
(86) International application number: PCT/JP2015/051863
(87) International publication number: WO 2015/129358

(57) **Abstract**

To provide a work tool capable of suppress temperature rise in a motor or a switching element. The work tool includes: a motor; a switching element switchable between an ON-state and an OFF-state, the switching element allowing a current to flow through the motor during the ON-state, the switching element prohibiting a current from flowing through the motor during the OFF-state; target rotation number setting means for setting a target rotation number of the motor; rotation number controlling means for controlling the motor such that the rotation number thereof is brought in coincidence with the target rotation number by changing an ON-duration, during which the switching element is in the ON-state, in one switching period of the switching element; and temperature detecting means for detecting at least one of a temperature of the motor and a temperature of the switching element. The rotation number controlling means is capable of setting an upper limit with respect to the ON-duration on the basis of the temperature detected by the temperature detecting means and changes the ON-duration within a range not more than the upper limit.

## Description

### [Technical Field]

The present invention relates to a work tool provided with a motor as a driving source, and more particularly, to a work tool configured to control a rotation number of the motor.

### [Background Art]

Conventionally, known is a work tool (PLT 1) including: a base portion on which a workpiece is mountable, a cutting portion accommodating a motor and rotatably supporting a circular saw blade, a supporting base portion standing from the base portion and supporting the cutting portion such that the cutting portion is in confrontation with the base portion, and a power source portion configured to receive power supply selectively from one of an AC power source and a DC power source and configured to supply suitable level of electric power to the motor for driving the same.

### [Citation List]

### [Patent Literature]

PTL 1: Japanese Patent Application Publication No. 2011-167830

### [Summary of Invention]

### [Technical Problem]

In recent years, the tendency of using a motor whose output is higher than that of a conventionally used motor is increasing. When the motor having higher output is employed, larger current flows through the motor and switching elements used for controlling the motor. Thus, a temperature rise in the motor and the switching elements tends to become greater. However, in the above-described work tool, the temperature rise in the motor and the switching elements is not taken into consideration. Therefore, the temperature rise in the motor and the switching elements cannot be suppressed, resulting in deterioration of the motor and the switching elements.

An object of the present invention is to provide a work tool capable of suppressing the temperature rise in the motor and the switching elements and restraining deterioration thereof due to the temperature rise.

### [Solution to Problem]

In order to attain above and other object, the present invention provides a work tool includes a motor; a switching element switchable between an ON-state and an OFF-state, the switching element allowing a current to flow through the motor during the ON-state, the switching element prohibiting a current from flowing through the motor during the OFF-state; target rotation number setting means for setting a target rotation number of the motor; rotation number controlling means for controlling the motor such that the rotation number thereof is brought in coincidence with the target rotation number by changing an ON-duration, during which the switching element is in the ON-state, in one switching period of the switching element; and temperature detecting means for detecting at least one of a temperature of the motor and a temperature of the switching element. the rotation number controlling means is capable of setting an upper limit with respect to the ON-duration on the basis of the temperature detected by the temperature detecting means and changes the ON-duration within a range not more than the upper limit.

According to the above configuration, the upper limit to the ON-duration in one switching period of the switching element can be set on the basis of the detected temperature. Therefore, current flowing through the motor and the switching element can be reduced by using the upper limit based on the temperature rise in the motor and the switching element. Consequently, the temperature rise caused by larger current flowing can be suppressed, and thus deterioration of the motor and the switching element due to temperature rise therein can be restrained.

Preferably, the rotation number controlling means lowers the upper limit as the detected temperature becomes higher.

In this configuration, the upper limit can be lowered as the detected temperature becomes higher. Accordingly, current flowing through the motor and the switching element can be reduced when temperatures of the motor and the switching element elevate. Consequently, the temperature rise in the motor and the switching element can be effectively suppressed, and thus deterioration of the motor and the switching element due to temperature rise therein can be effectively restrained.

Preferably, the rotation number controlling means is further capable of setting a temperature threshold value. The rotation number controlling means sets the upper limit to a first upper limit when the detected temperature is lower than the temperature threshold value, whereas the rotation number controlling means sets the upper limit to a second upper limit which is lower than the first upper limit when the detected temperature is equal to or higher than the temperature threshold value.

By the above configuration, the upper limit is lowered when the detected temperature becomes equal to or higher than the temperature threshold value. Accordingly, current flowing through the motor and the switching element can be reduced when the temperatures of the motor and the switching element elevate to a temperature equal to or higher than the temperature threshold value. Consequently, the temperature rise in the motor and the switching element can be effectively suppressed, and thus deterioration of the motor and the switching element due to temperature rise therein can be effectively restrained.

Preferably, the rotation number controlling means is capable of setting a plurality of temperature threshold values. The plurality of temperature threshold values are set such that the upper limit is lowered as the detected temperature becomes higher.

In the above configuration, temperature threshold values are set such that the upper limit is lowered as the detected temperature becomes higher. Therefore, current flowing through the motor and the switching element is reduced as temperatures of the motor and the switching element rise. Accordingly, the temperature rise in the motor and the switching element can be effectively suppressed, and thus deterioration of the motor and the switching element due to temperature rise therein can be effectively restrained.

Preferably, the rotation number controlling means is further capable of setting a lowering degree used when lowering the upper limit. The rotation number controlling means sets the lowering degree to a first lowering degree when the target rotation number of the motor is set to a first rotation number, whereas the rotation number controlling means sets the lowering degree to a second lowering degree which is greater than the first lowering degree when the target rotation number is set to a second rotation number which is smaller than the first rotation number.

With this configuration, the lowering degree for lowering the upper limit can be increased as the target rotation number becomes smaller. Accordingly, assuming that employed is a configuration such that a fan which is rotated upon driving of the motor cools the same or the switching element, when the cooling performance of the fan is insufficient due to low target rotation number, current flowing through the motor and the switching element can be further reduced in comparison with a case of sufficient cooling performance of the fan due to high target rotation number. Consequently, the temperature rise in the motor and the switching element can be effectively suppressed.

Preferably, the rotation number controlling means sets the temperature threshold value to a first threshold value when the upper limit is set to a specific value and the target rotation number of the motor is set to a first rotation number, whereas the rotation number controlling means sets the temperature threshold value to a second threshold value which is lower than the first threshold value when the upper limit is set to the specific value and the target rotation number of the motor is set to a second rotation number which is smaller than the first rotation number.

With this configuration, assuming that employed is a configuration such that a fan which is rotated upon driving of the motor cools the same or the switching element, when the cooling performance of the fan is insufficient due to low target rotation number, the temperature threshold value can be further lowered in comparison with a case of sufficient cooling performance of the fan due to high target rotation number. Accordingly, current flowing through the motor and the switching element can be further reduced. Consequently, the temperature rise in the motor and the switching element can be effectively suppressed.

Preferably, the rotation number controlling means sets the upper limit to a first upper limit when the detected temperature is a specific temperature and the target rotation number of the motor is set to a first rotation number, whereas the rotation number controlling means sets the upper limit to a second upper limit which is lower than the first upper limit when the detected temperature is the specific temperature and the target rotation number of the motor is a second rotation number which is smaller than the first rotation number.

With the above configuration, assuming that employed is a configuration such that a fan which is rotated upon driving of the motor cools the same or the switching element, when the cooling performance of the fan is insufficient due to low target rotation number, the upper limit can be further lowered in comparison with a case of sufficient cooling performance of the fan due to high target rotation number. Therefore, current flowing through the motor and the switching element can be further reduced. Consequently, the temperature rise in the motor and the switching element can be effectively suppressed.

Preferably, the rotation number controlling means lowers the upper limit step-by-step over a period of time that is more than twice as long as the one switching period.

With this configuration, when lowering the upper limit, the upper limit is lowered step-by-step over the period of time that is more than twice as long as the one switching period. Thus, the upper limit can be smoothly changed, resulting in smooth variation of the rotation number of the motor. Consequently, finishing to workpiece can be attained favorably.

Preferably, the work tool further includes motor stop means for stopping driving of the motor when the detected temperature is equal to or higher than a predetermined temperature.

With this configuration, by setting the predetermined temperature to an allowable limit temperature of the motor or the switching element, excessive temperature rise therein can be suppressed. Consequently, breakage of the motor or the switching element due to excessive temperature rise can be restrained.

Preferably, the work tool further includes mode changeover means for changing over a drive control to the motor between a first mode under which the rotation number controlling means sets the upper limit and a second mode under which the rotation number controlling means does not set the upper limit.

In the above configuration, a user can select one of the first mode and the second mode. As a result, in accordance with working situations, the user can select as to whether to set the upper limit or not. Consequently, enhanced workability and convenience can be obtained.

Preferably, the work tool further includes a housing providing an accommodating chamber accommodating both the motor and the switching element. The temperature detecting means is accommodated in the accommodating chamber.

In this configuration, the temperature detecting means, the motor, and the switching element are accommodated in the accommodating chamber. Accordingly, enhanced accuracy of temperature detection using the temperature detecting means can be obtained.

### [Advantageous Effects of Invention]

The present invention can provide a work tool capable of suppressing the temperature rise in the motor and the switching elements and restraining deterioration thereof due to the temperature rise.

### [Brief Description of Drawings]

[Fig. 1]

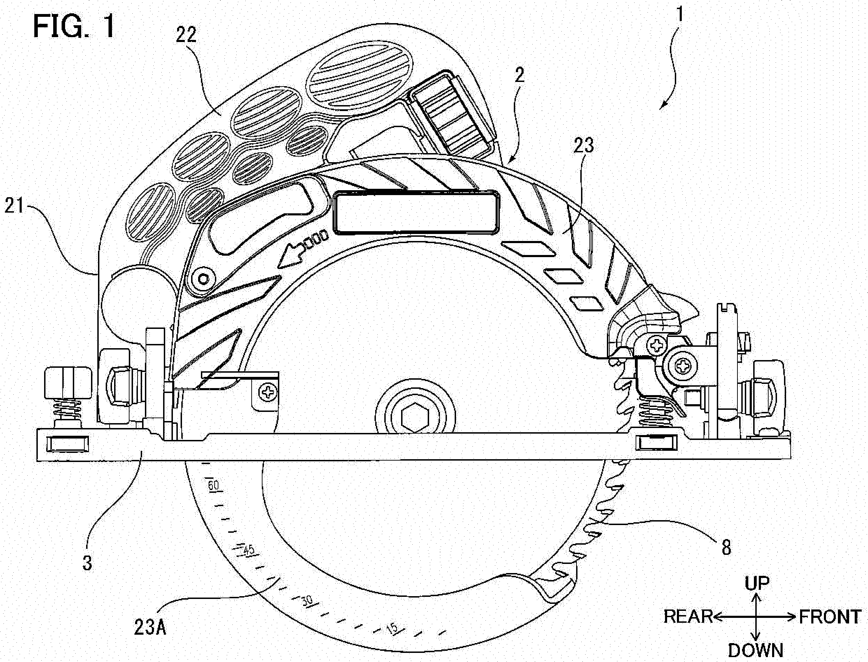

   Fig. 1 is a right side view of an electric circular saw according to a first embodiment of the present invention.
[Fig. 2]

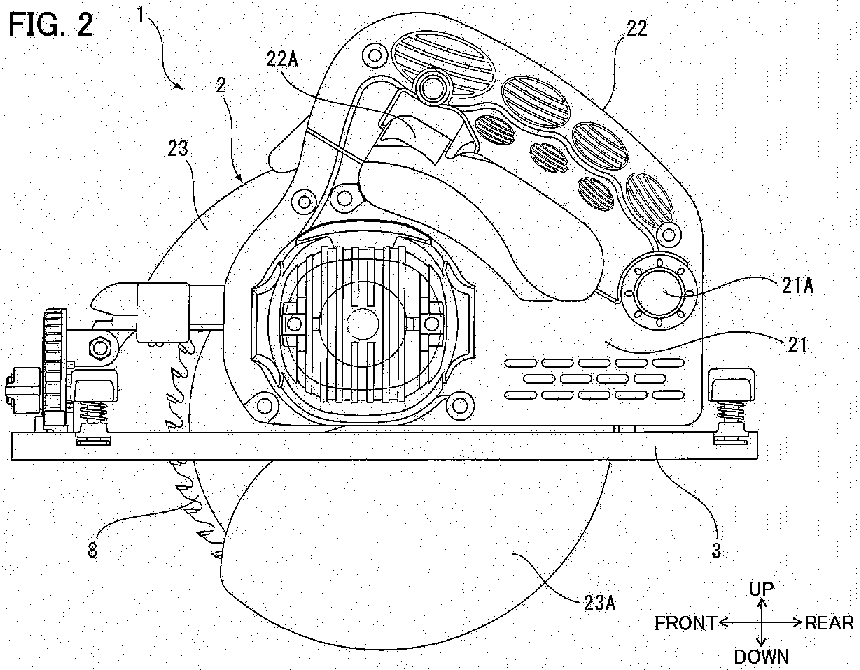

   Fig. 2 is a left side view of the electric circular saw according to the first embodiment of the present invention.
[Fig. 3]

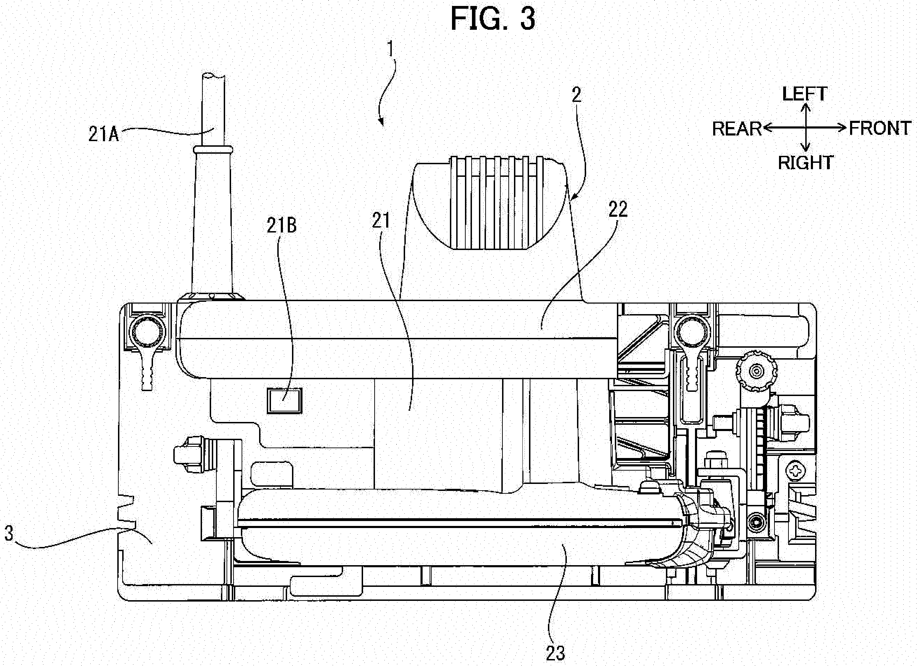

   Fig. 3 is a plan view of the electric circular saw according to the first embodiment of the present invention.
[Fig. 4]

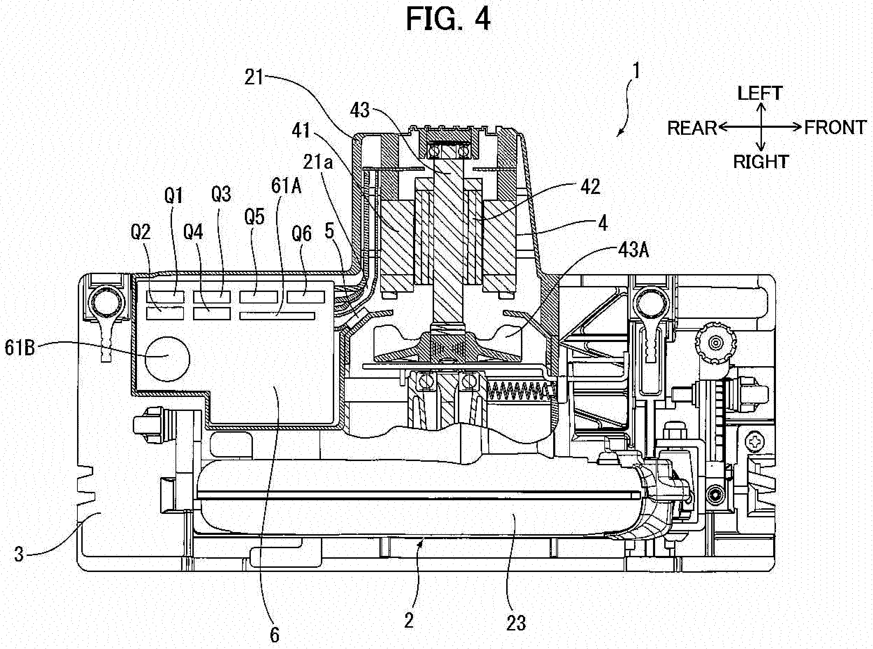

   Fig. 4 is a plan view partially cross-sectioned illustrating an interior of the electric circular saw according to the first embodiment of the present invention.
[Fig. 5]

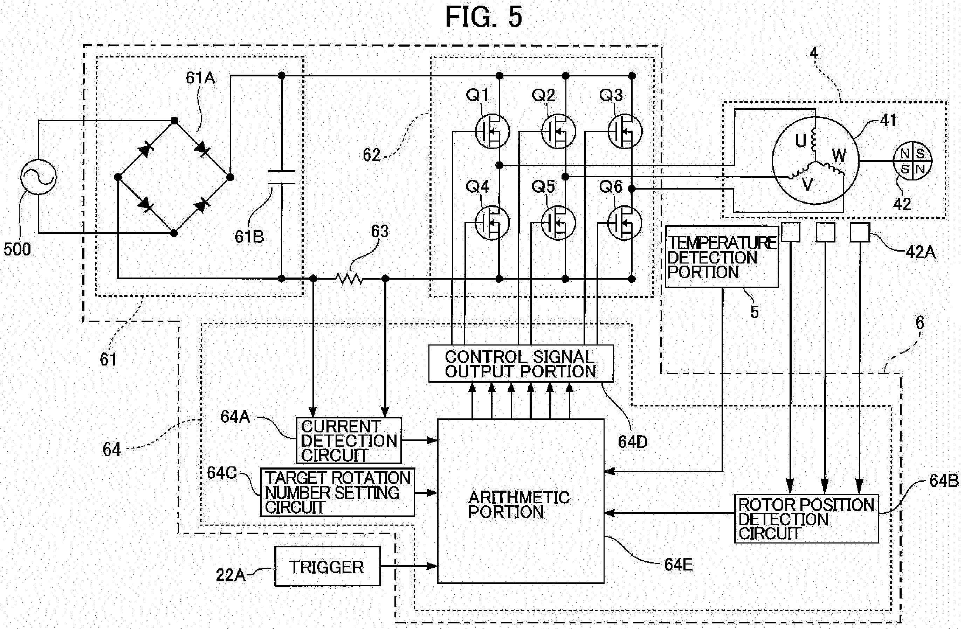

   Fig. 5 is a circuit and block diagram illustrating a control substrate included in the electric circular saw according to the first embodiment of the present invention.
[Fig. 6]

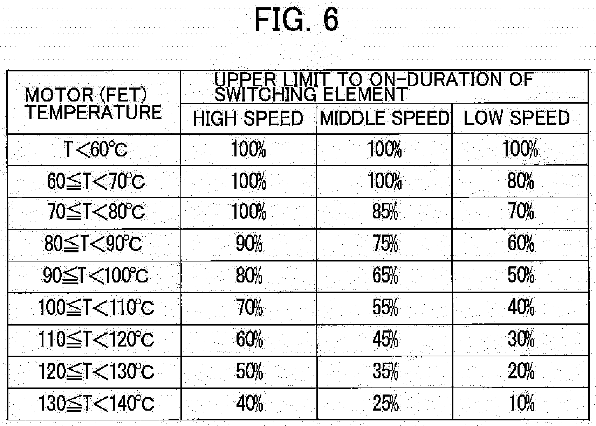

   Fig. 6 is an upper-limit setting table illustrating a relationship between a detection temperature and an upper limit of a duty ratio, both of which relate to a rotation number control to a motor included in the electric circular saw according to the first embodiment of the present invention.
[Fig. 7]

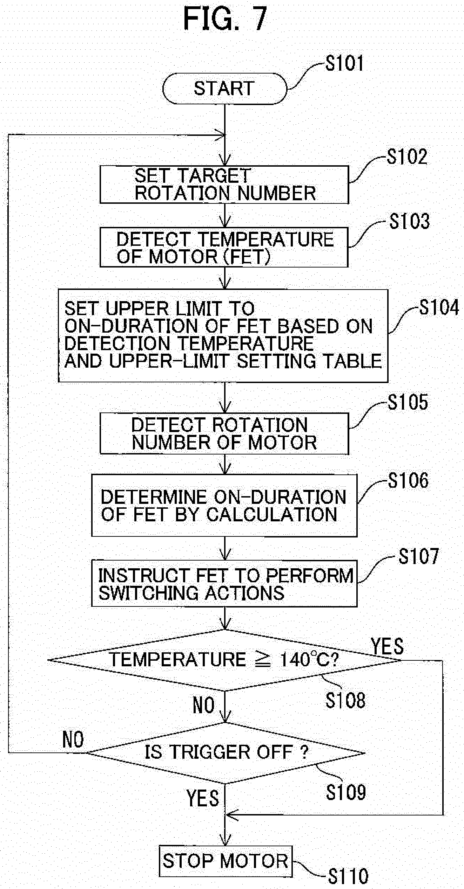

   Fig. 7 is a flowchart illustrating a drive control of the electric circular saw according to the first embodiment of the present invention.
[Fig. 8]

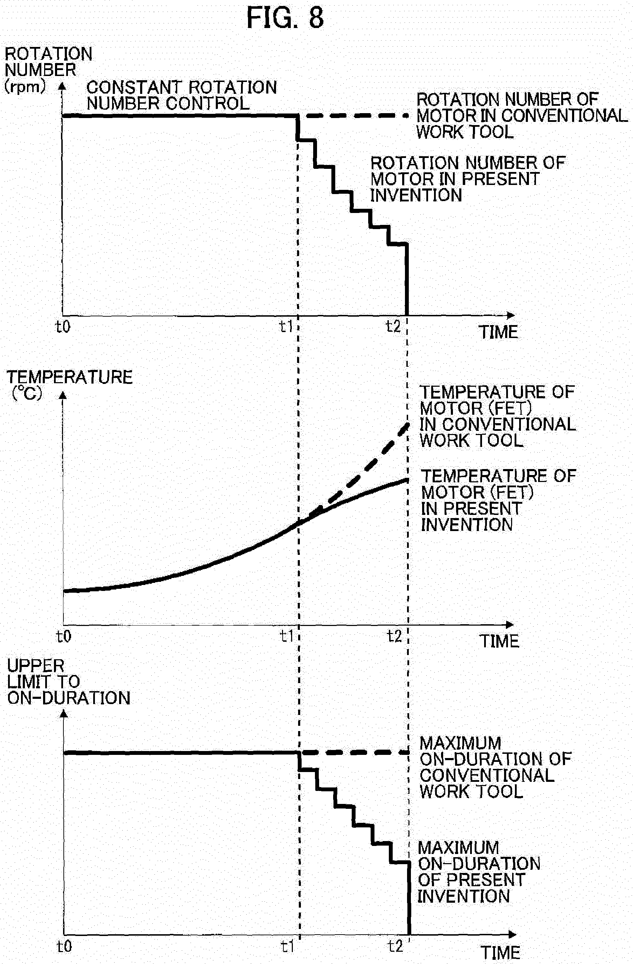

   Fig. 8 is a comparative diagram between the electric circular saw according to the first embodiment of the present invention and a conventional electric circular saw in terms of variation with time of the rotation number, the detection temperature, and the duty ratio during driving.
[Fig. 9]

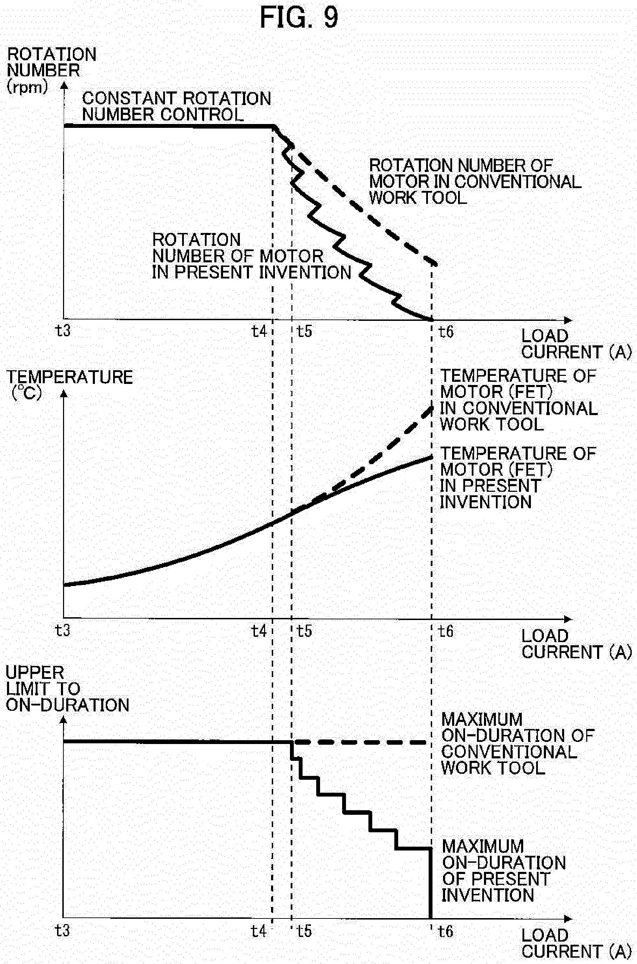

   Fig. 9 is a diagram illustrating a relationship between the electric circular saw according to the first embodiment of the present invention and a conventional electric circular saw in terms of variation of the rotation number, the detection temperature, and the duty ratio depending on increase of load current during driving.
[Fig. 10]

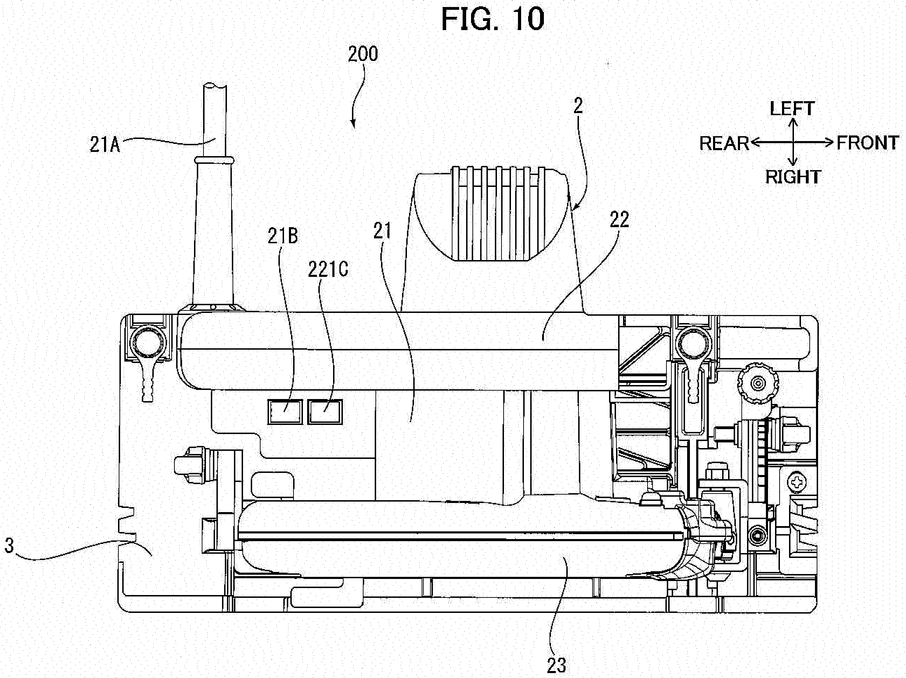

   Fig. 10 is a plan view of an electric circular saw according to a second embodiment of the present invention.
[Fig. 11]

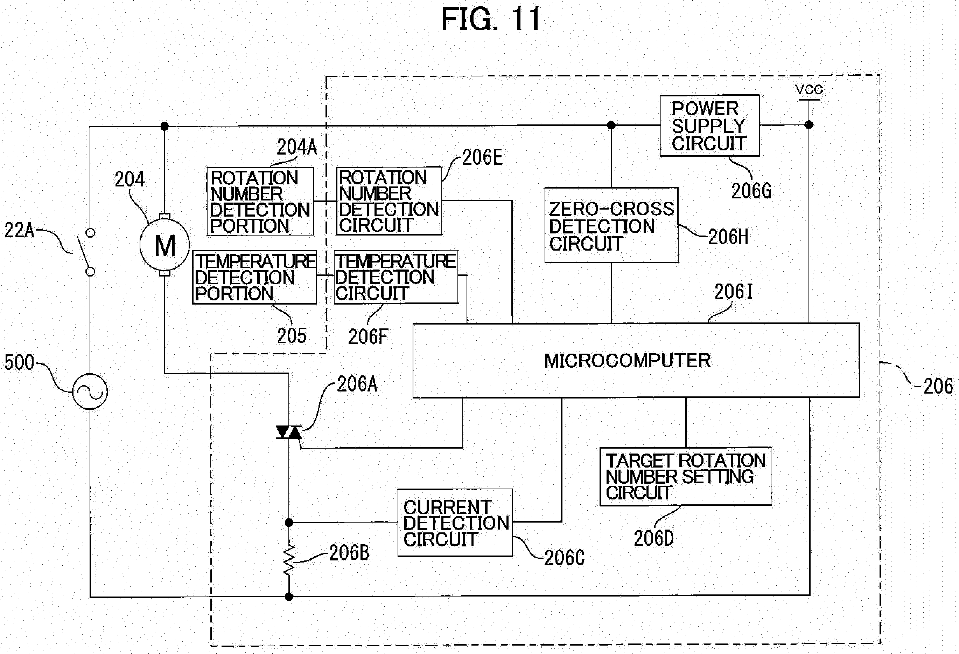

   Fig. 11 is a circuit and block diagram illustrating a driving control circuit included in the electric circular saw according to the second embodiment of the present invention.
[Fig. 12]

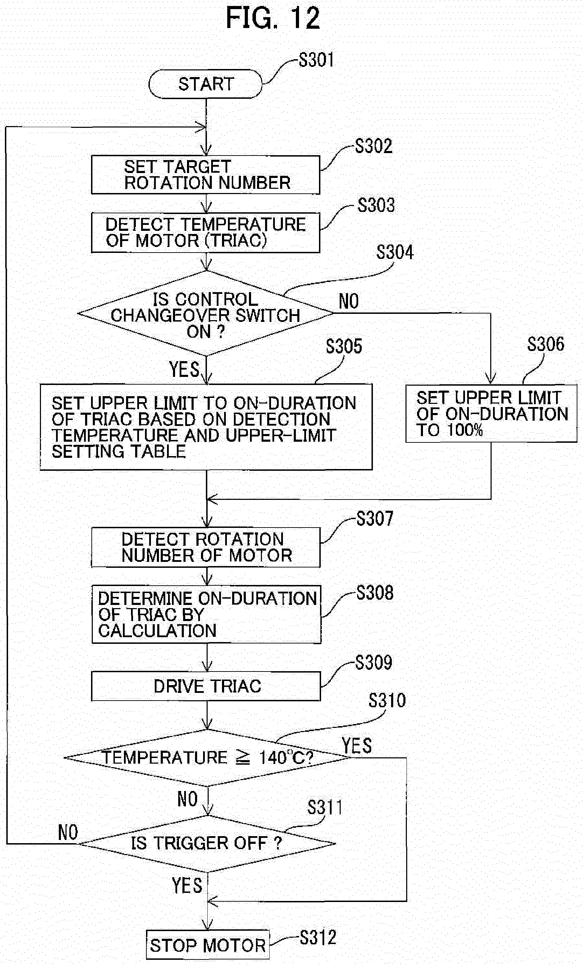

   Fig. 12 is a flowchart illustrating a drive control of the electric circular saw according to the second embodiment of the present invention.

### [Description of Embodiments]

A work tool according to a first embodiment of the present invention will be described with reference to Figs. 1 through 9. An electric circular saw 1 illustrated in Fig. 1 is an example of the work tool. The electric circular saw 1 is provided with a base 3 and a housing 2 rotatably supporting a circular saw blade 8. In the electric circular saw 1, a user slidingly moves the base 3 relative to a workpiece while the circular saw blade 8 is rotated, so that the workpiece is cut by the rotating circular saw blade 8. For facilitating the following description, directions indicated by the arrows "front," "rear," "up," and "down" depicted in Fig. 1 are defined as "frontward direction," "rearward direction," "upward direction," and "downward direction," respectively. Further, a direction from a right side to a left side of the electric circular saw 1 when viewed from a rear side thereof is defined as "leftward direction", and a direction opposite to the leftward direction is defined as "rightward direction." That is, in Fig. 1 a direction from the front to the back of the sheet of drawing is coincident with the leftward direction and a direction from the back to the front of the sheet of drawing is coincident with the rightward direction.

As illustrated in Figs. 1 and 4, the housing 2 includes a main housing 21, a handle portion 22, and a saw cover 23. The housing 2 is tiltable rightward and leftward with respect to the base 3. The base 3 has a plate-shape and is made of metal such as, for example, aluminum and the like. The base 3 is formed with a hole (not illustrated). The hole penetrates the base 3 in an upward/downward direction and extends in a frontward/rearward direction, so that the hole allows the circular saw blade 8 to enter thereinto. A longitudinal direction (i.e. the frontward/rearward direction) of the base 3 is coincident with a cutting direction.

The main housing 21 is made from, for example, resin and accommodates therein a motor 4, a temperature detection portion 5, and a control substrate 6. As illustrated in Fig. 4, the motor 4, the temperature detection portion 5, and the control substrate 6 are accommodated in an accommodating chamber 21a provided within the main housing 21. As illustrated in Fig. 3, the main housing 21 rotatably supports the circular saw blade 8 and includes a power cord 21A and a target rotation number setting switch 21B. Details of the motor 4, the temperature detection portion 5, and the control substrate 6 will be described later.

As illustrated in Fig. 3, the power cord 21A extends leftward from a rear left portion of the main housing 21 and is connectable to a commercial AC power source 500. The power cord 21A is electrically connected to the control substrate 6 within the main housing 21, so that electric power is supplied from the commercial AC power source 500 to the motor 4 via both the power cord 21A and the control substrate 6.

As illustrated in Fig. 3, the target rotation number setting switch 21B is for selecting a rotation number of the motor 4 and is disposed on an upper surface of the main housing 21. The target rotation number setting switch 21B is electrically connected to the control substrate 6 within the main housing 21 and outputs to the control substrate 6 a signal indicating a target rotation number. By manipulating the target rotation number setting switch 21B, a user can select the rotation number of the motor 4 among three kinds of rotation numbers: "high speed"; "middle speed"; and "low speed." Each time the target rotation number setting switch 21B is pushed, a selection state of the target rotation number is changed over. This change-over of the selection state is performed in the order of "high speed," "middle speed," and "low speed." Accordingly, the user can select a desired rotation number by pushing the target rotation number setting switch 21B a plurality of times. Note that, in the present embodiment, "high speed" is 5000 rpm, "middle speed" is 4000 rpm, and "low speed" is 3000 rpm.

As illustrated in Fig. 1, the circular saw blade 8 has a disc-shape and is rotatably provided rightward of the main housing 21. The circular saw blade 8 is rotationally driven upon rotation of the motor 4.

As illustrated in Fig. 2, the handle portion 22 is a portion which the user grips when using the electric circular saw 1. The handle portion 22 is positioned upward of the main housing 21 and extends in the frontward/rearward direction. A trigger 22A for controlling driving of the motor 4 is provided at the handle portion 22. The trigger 22A is electrically connected to the control substrate 6 within the main housing 21. The user presses the trigger 22A upward, so that the trigger 22A outputs a start signal for starting the motor 4 to the control substrate 6.

As illustrated in Figs. 1 and 3, the saw cover 23 is made of, for example, metal and has an arc-shape curved along an outer edge of the circular saw blade 8 in a side view. The saw cover 23 is disposed at a right side of the main housing 21 and covers a substantially upper half of the circular saw blade 8. The saw cover 23 is provided with a protective cover 23A. The protective cover 23A is made from resin, for example. The protective cover 23A is provided at a rear portion of the saw cover 23 so as to be pivotally movable along the outer edge of the circular saw blade 8. A urging member (not illustrated) is disposed between the saw cover 23 and the protective cover 23A. In a circumferential direction of the saw cover 23, the urging member urges the protective cover 23A in a covering direction in which the protective cover 23A covers a lower half of the circular saw blade 8. When a cutting operation is not performed, the protective cover 23A covers the lower half of the circular saw blade 8 excluding a portion of a front portion of the circular saw blade 8.

Next, the motor 4, the temperature detection portion 5, and the control substrate 6 will be described. As illustrated in Figs. 4 and 5, the motor 4 is a three-phase brushless DC motor and includes a stator 41, a rotor 42, and a rotary shaft 43. The stator 41 includes three-phase coils U, V, and W which are star-connected. Each of the coils U, V, and W is connected to the control substrate 6. The rotor 42 includes two permanent magnets each having N and S poles. Hall elements 42A are disposed so as to be in confrontation with the permanent magnets. The hall elements 42A output to the control substrate 6 position signals indicating a position of the rotor 42. The rotary shaft 43 is rotatably supported to the main housing 21 and extends in a leftward/rightward direction. The rotary shaft 43 is rotationally driven upon driving of the motor 4. A fan 43A is provided at the rotary shaft 43 so as to be rotatable coaxially therewith. Upon the rotational driving of the rotary shaft 43, the fan 43A is rotated so that the motor 4 and the control substrate 6 are cooled. Further, the rotary shaft 43 is connected to the circular saw blade 8 via a deceleration mechanism (not illustrated). The circular saw blade 8 is rotated upon the rotational driving of the rotary shaft 43.

As illustrated in Fig. 5, the control substrate 6 is provided with a rectifying smoothing circuit 61, a switching circuit 62, a current detection resistor 63, and a control portion 64. The rectifying smoothing circuit 61 includes a diode bridge circuit 61A and a smoothing capacitor 61B and is connected to both the commercial AC power source 500 and the switching circuit 62. As illustrated in Figs. 4 and 5, the diode bridge circuit 61A is mounted on the control substrate 6 and full-wave rectifies AC voltage inputted from the commercial AC power source 500. The smoothing capacitor 61B is mounted on the control substrate 6 and smooths the full-wave rectified voltage. The rectifying smoothing circuit 61 full-wave rectifies AC voltage inputted from the commercial AC power source 500 using the diode bridge circuit 61A, smooths the full-wave rectified voltage using the smoothing capacitor 61B, and outputs the resultant voltage to the switching circuit 62.

As illustrated in Figs. 4 and 5, the switching circuit 62 is mounted on the control substrate 6 and includes six FETs Q1 through Q6 which are connected to form a three-phase bridge circuit. Each of the FETs Q1 through Q6 has a gate connected to the control portion 64. Either drain or source of each of the FETs Q1 through Q6 is connected to the relevant coils U, V or W of the star-connection. Each of the FETs Q1 through Q6 performs switching actions in which its ON-state and OFF-state are repeated in response to drive signals inputted from the control portion 64, thereby producing three-phase voltages from the full-wave rectified DC voltage outputted by the rectifying smoothing circuit 61 and thus supplying the three-phase voltages to the coils U, V, and W. Each of the EFTs Q1 through Q6 is an example of "switching element."

The current detection resistor 63 is for detecting current flowing through the motor 4 and is connected between the rectifying smoothing circuit 61 and the switching circuit 62.

As illustrated in Fig. 4 and 5, the temperature detection portion 5 is disposed within the main housing 21 and at a position between the motor 4 and the control substrate 6. A temperature detecting element such as, for example, a thermistor and the like is used as the temperature detection portion 5. The temperature detection portion 5 detects temperatures of the motor 4 and each of the FETs Q1 through Q6 in the switching circuit 62. In addition, the temperature detection portion 5 outputs, as a detection temperature, to the control portion 64 the highest temperature among the detected temperatures of the motor 4 and the FETs Q1 through Q6. In the present embodiment, among the detected temperatures of the motor 4 and the FETs Q1 through Q6, the highest one is outputted to the control portion 64 as the detection temperature. However, the temperature outputted to the control portion 64 as the detection temperature is not limited to the highest one. For example, only the detected temperature of the motor 4 may be outputted as the detection temperature to the control portion 64. Alternatively, an average of the detected temperatures of the motor 4 and the FETs Q1 through Q6 may be outputted as the detection temperature to the control portion 64. Further alternatively, temperature of specific one of the FETs Q1 through Q6 may be outputted to the control portion 64 as the detection temperature. The temperature detection portion 5 is an example of "temperature detecting means."

As illustrated in Fig. 5, the control portion 64 is provided with a current detection circuit 64A, a rotor position detection circuit 64B, a target rotation number setting circuit 64C, a control signal output portion 64D, and an arithmetic portion 64E. The current detection circuit 64A detects a voltage drop value across the current detection resistor 63 and outputs the resultant voltage to the arithmetic portion 64E. The rotor position detection circuit 64B outputs to the arithmetic portion 64E the position signals fed from the hall elements 42A of the motor 4. The target rotation number setting circuit 64C outputs to the arithmetic portion 64E a signal indicating the selected target rotation number set by the target rotation number setting switch 21B. The control signal output portion 64D is connected to the gate of each of the FETs Q1 through Q6. The control signal output portion 64D selectively applies voltage to the gates of the FETs Q1 through Q6 on the basis of the drive signals inputted from the arithmetic portion 64E. Among the FETs Q1 through Q6, each FET whose gate is being applied with the voltage is held in an ON-state where the ON-state FET allows current to flow therethrough to the motor 4, whereas each FET whose gate is not being applied with the voltage is held in an OFF-state where the OFF-state FET prohibits current from flowing therethrough to the motor 4.

Although not illustrated in the drawings, the arithmetic portion 64E includes a central processing unit (CPU) for outputting the drive signals on the basis of a processing program and data, a ROM for storing the processing program, control data, and various threshold values, and a RAM for temporarily storing data. The arithmetic portion 64E generates the drive signals for sequentially switching on the FETs Q1 through Q6 on the basis of the position signals, indicating the position of the rotor 42, fed from the rotor position detection circuit 64B, and outputs the control signals to control signal output portion 64D. As a result, current sequentially flows in the coils U, V and W, thereby causing the rotor 42 to rotate in a preset rotational direction. In this case, the drive signals outputted to the FETs Q4 through Q6 connected to the negative power source line are outputted as a pulse width modulation signal (PWM signal).

The arithmetic portion 64E changes the duty ratio of the PWM signal on the basis of the signal, indicating the target rotation number, fed from the target rotation number setting circuit 64C and switches ON/OFF the FETs Q4 through Q6 at a high speed, thereby adjusting the power supply quantity to the motor 4 and thus controlling the rotation number (the rotational speed) thereof. The PWM signal is a signal whose signal-output duration (pulse width) in one switching period (a prescribed period) for switching ON/OFF the FET is changeable. The duty ratio is a percentage of the signal-output duration to one switching period (the prescribed period). The arithmetic portion 64E changes an ON-duration, during which the FET is held in its ON-state, in one switching period of each of the FETs Q4 through Q6 by changing the duty ratio. As a result, the power supply quantity to the motor 4 is changed. Further, the arithmetic portion 64E controls start and stop of the motor 4 on the basis of the start signal fed from the trigger 22A.

The arithmetic portion 64E calculates the rotation number of the motor 4 on the basis of the position signals which indicate the position of the rotor 42 and are inputted from the rotor position detection circuit 64B, and compares the calculated rotation number with the target rotation number inputted from the target rotation number setting circuit 64C. The arithmetic portion 64E further determines the power supply quantity to the motor 4 on the basis of the comparison result, thereby adjusting the power supply quantity to the motor 4 such that the rotation number of the motor 4 is brought in coincidence with the selected target rotation number. In this way, the control portion 64 performs a constant rotation number control such that the rotation number of the motor 4 is brought in coincidence with the target rotation number.

In addition, the arithmetic portion 64E is able to set an upper limit of the ON-duration in one switching period of each of the FETs Q4 through Q6, i.e., an upper limit of the duty ratio on the basis of the detection temperature inputted from the temperature detecting portion 5. The arithmetic portion 64E performs a upper-limit setting control for setting the upper limit with respect to the duty ratio on the basis of the detection temperature. In the upper-limit setting control, the constant rotation number control is performed by changing the duty ratio within a range not more than the set upper limit. That is, in the upper-limit setting control, if a duty ratio which is greater than the set upper limit is required for maintaining the constant rotation number control, the duty ratio is controlled so as not to exceed the set upper limit in preference to the maintenance of the constant rotation number control.

A table depicted in Fig. 6 is an upper-limit setting table indicating a relationship between the detection temperature and the upper limit, i.e., a relationship between the temperature threshold value and the upper limit, which is employed when setting the upper limit on the basis of the detection temperature in the upper-limit setting control. The upper-limit setting table is stored in the ROM of the arithmetic portion 64E. Note that, in the upper-limit setting table depicted in Fig. 6, the ON-duration in one switching period of the FETs Q1 through Q6 is expressed by the duty ratio (% representation) and "T" expresses the detection temperature.

As illustrated in the upper-limit setting table, the temperature threshold value is preset so as to lower the upper limit in accordance with an elevation of the detection temperature. For example, the upper limit employed when the target rotation number is set to "high speed" and the detection temperature is equal to or higher than 110°C but lower than 120°C is preset to 60% (an example of "first upper limit"), and the temperature threshold value corresponding to this temperature range is preset to 120°C (an example of "temperature threshold value"). The upper limit employed when the detection temperature has reached to a temperature equal to or higher than this temperature threshold value so that the detection temperature is equal to or higher than 120°C but lower than 130°C is preset to 50% (an example of "second upper limit"), and the temperature threshold value corresponding to this temperature range is preset to 130°C (an example of "temperature threshold value").

In this way, since the temperature threshold value is preset such that the upper limit is lowered in accordance with the elevation of the detection temperature, current flowing through the motor 4 and the FETs Q1 through Q6 can be reduced when the temperatures of the motor 4 and the FETs Q1 through Q6 rise. Accordingly, the temperature rise can be effectively suppressed, and thus deterioration of the motor 4 and the FETs Q1 through Q6 caused by the temperature rise therein can be restrained.

Further, as illustrated in the upper-limit setting table, a lowering degree by which the upper limit is lowered when the detection temperature becomes equal to or higher than the set temperature threshold value is preset so as to become greater as the target rotation number becomes smaller. For example, the upper limit employed when the target rotation number is set to "low speed" (an example of "second rotation number") and the detection temperature is lower than 60°C is preset to 100%, and the temperature threshold value corresponding to this temperature range is preset to 60°C. The upper limit employed when the detection temperature rises to a temperature equal to or higher than this temperature threshold value so that the detection temperature becomes equal to or higher than 60°C but lower than 70°C is preset to 80%, and the lowering degree in this case is preset to 20% (an example of "second lowering degree"). On the other hand, the upper limit employed when the target rotation number is set to "middle speed" (an example of "first rotation number") and the detection temperature is equal to or higher than 90°C but lower than 100°C is preset to 65%, and the temperature threshold value corresponding to this temperature range is preset to 100°C. The upper limit employed when the detection temperature rises to a temperature equal to or higher than this temperature threshold value so that the detection temperature become equal to or higher than 100°C but lower than 110°C is preset to 55%, and the lowering degree in this case is preset to 10% (an example of "first lowering degree").

As described above, the lowering degree used when lowering the upper limit is preset so as to become greater as the target rotation number becomes smaller. Therefore, the upper limit of the duty ratio can be largely reduced in a case where the cooling performance of the fan 43A provided at the rotary shaft 43 of the motor 4 is low due to low setting of the target rotation number, rather than in a case where the cooling performance of the fan 43A is at a certain level due to high setting of the target rotation number. Accordingly, the upper limit of the duty ratio can be further greatly lowered when suppression of the temperature rise in the motor 4 and the FETs Q1 through Q6 is insufficient only by the cooling performance of the fan 43A due to low cooling performance of the fan 43A. Consequently, current flowing through the motor 4 and the FETs Q1 through Q6 can be reduced, and thus deterioration of the motor 4 and the FETs Q1 through Q6 can be further effectively restrained.

Similarly, in consideration of the fact that the cooling performance of the fan 43A becomes lower as the target rotation number becomes smaller, the temperature threshold value is preset so as to become lower as the target rotation number becomes smaller in a case where the upper limit of the duty ratio is set to a specific value. For example, in a case where the upper limit is set to 100%, the temperature threshold value when the target rotation number is set to "high speed" (an example of "first rotation number") is preset to 80°C (an example of "first threshold value"), the temperature threshold value when the target rotation number is set to "middle speed" (an example of "first rotation number" or "second rotation number") is preset to 70°C (an example of "first threshold value" or "second threshold value"), and the temperature threshold value when the target rotation number is set to "low speed" (an example of "second rotation number") is preset to 60°C (an example of "second threshold value").

Further, in consideration of the fact that the cooling performance of the fan 43A becomes lower as the target rotation number becomes smaller, the upper limit is preset so as to become lower as the target rotation number becomes smaller in a case where the detection temperature is a specific temperature. For example, in a case where the detection temperature is equal to or higher than 130°C but lower than 140°C, the upper limit when the target rotation number is set to "high speed" (an example of "first rotation number") is preset to 40% (an example of "first upper limit"), the upper limit when the target rotation number is set to "middle speed" (an example of "first rotation number" or "second rotation number") is preset to 25% (an example of "first upper limit" or "second upper limit"), and the upper limit when the target rotation number is set to "low speed" (an example of "second rotation number") is preset to 10% (an example of "second upper limit").

As described above, preferably, the relationship between the detection temperature, the upper limit, and the temperature threshold value should be determined in consideration of the target rotation number of the motor 4 and the like.

When the detection temperature becomes 140°C or higher, the arithmetic portion 64E stops driving the motor 4 by stopping outputting the drive signals to the control signal output portion 64D regardless of whether the target rotation number is set to "high speed," "middle speed," or "low speed." Thus, when the temperatures of the motor 4 and the FETs Q1 through Q6 elevates to such a high level that large loads are applied to the motor 4 and the FETs Q1 through Q6, the energization to the motor 4 and the FETs Q1 through Q6 is interrupted and the driving of the motor 4 is stopped in any target rotation number, thereby protecting the motor 4 and the FETs Q1 through Q6 from breakage caused by excessive temperature rise and the like. The arithmetic portion 64E is an example of "target rotation number setting means." Also, the arithmetic portion 64E is an example of "rotation number controlling means." Further, the arithmetic portion 64E is an example of "motor stop means."

Next, the drive control to the electric circular saw 1 will be described while referring to a flowchart illustrated in Fig. 7. When the trigger 22A of the electric circular saw 1 is manipulated by the user, the drive control to the motor 4 is commenced (S101). Once the drive control is started, the arithmetic portion 64E sets the target rotation number (S102). The target rotation number setting circuit 64C outputs the target rotation number set by the user to the arithmetic portion 64E, and the latter sets the target rotation number on the basis of the outputted target rotation number. After setting the target rotation number, the arithmetic portion 64E detects temperatures of the motor 4 and the FETs Q1 through Q6 (S103). This detection of temperatures is performed by the above-described detection temperature being inputted from the temperature detecting portion 5 to the arithmetic portion 64E.

After detecting the temperatures, the arithmetic portion 64E sets the upper limit of the duty ratio on the basis of both the detection temperature and the upper-limit setting table, that is, the arithmetic portion 64E sets the upper limit with respect to the ON-duration in one switching period of the FETs Q4 through Q6 (S104). For example, as illustrated in the upper-limit setting table, when the target rotation number is set to "middle speed" and the detection temperature is equal to or higher than 70°C but lower than 80°C, the upper limit is set to 85% and the temperature threshold value corresponding this temperature range is set to 80°C.

Subsequently, the arithmetic portion 64E detects the rotation number of the motor 4 (S105). This detection of the rotation number of the motor 4 is performed by the position signals, indicating the position of the rotor 42, being inputted from the rotor position detection circuit 64B to the arithmetic portion 64E. Next, the arithmetic portion 64E determines the duty ratio of the PWM signals to be outputted to the FETs Q4 through Q6 (S106). On the basis of the comparison result between the rotation number of the motor 4 and the target rotation number, this duty ratio is determined within the range not more than the upper limit set in Step 104.

After the duty ratio is determined, the arithmetic portion 64E instructs the FETs Q4 through Q6 to perform the switching actions (S107). In this case, the FETs Q4 through Q6 are driven by the PWM signals with the determined duty ratio. Subsequently, the arithmetic portion 64E determines whether or not the detection temperature is equal to or higher than 140°C (S108). When the detection temperature is determined to be equal to or higher than 140°C (S108: Yes), the arithmetic portion 64E stops the driving of the motor 4 by not outputting the drive signals to the FETs Q1 through Q6 (S110).

On the other hand, when the detection temperature is determined not to be equal to or higher than 140°C (S108: No), the arithmetic portion 64E determines whether or not the trigger 22A is OFF (S109). When the trigger 22A is determined to be OFF (S109: Yes), the arithmetic portion 64E stops the motor 4 (S110). When the trigger 22A is determined not to be OFF (S109: No), the routine is returned to Step 102 and then the arithmetic portion 64E continues driving the motor 4 while repeatedly performing the processes in Steps 102 through 109 until the trigger 22A is turned off. When the detection temperature elevates during the repetition of Steps 102 through 109, in Step 104, the upper limit of the duty ratio is re-set on the basis of both the elevated detection temperature and the upper-limit setting table, and also the temperature threshold value corresponding to a temperature range to which the elevated detection temperature belongs is re-set. When resetting the upper limit, the arithmetic portion 64E lowers the upper limit step-by-step over a period of time that is more than twice as long as the one switching period. In this way, the rotation number of the motor is smoothly varied by virtue of smoothly changing the upper limit. Accordingly finishing to workpiece can be attained favorably. Particularly, in case where the cutting operation is performed using the rotating circular saw blade 8 of the electric circular saw 1, abrupt variation in the rotation number during the cutting operation causes excessive degradation to a cutting surface of the workpiece. In view of the foregoing, smooth variation control to the rotation number of the motor contributes to enhancement of finishing to the cutting surface of the workpiece.

In this way, the rotation number of the motor 4 is controlled in a state where the upper limit of the duty ratio is set on the basis of the detection temperature. Therefore, the temperature rise in the motor 4 and the FETs Q1 through Q6 can be suppressed. Figs. 8 and 9 is a diagram for comparing the drive control (the rotation number control) to the motor 4 performed by the electric circular saw 1 according to the first embodiment of the present invention with a drive control performed by a conventional work tool in which the temperature rise in the motor and the switching elements is not taken into consideration.

Fig. 8 is a diagram illustrating variation of the rotation number of the motor, the detection temperature, and the upper limit of the duty ratio in association with the elapsed time, in a case where a constant load is imposed. Note that, the variation with time of each of the above elements under the drive control in the electric circular saw 1 is indicated by a solid line. On the other hand, the variation with time of each of the above elements under the drive control in the conventional work tool is indicated by a dashed line.

As illustrated in Fig. 8, in the conventional work tool, in a state where the upper limit is not set with respect to the duty ratio, the drive control under which the rotation number is kept constant is performed from a time t0 at which the drive control is started to a time t2 at which the work is finished.

On the other hand, in the electric circular saw 1, the driving of the motor 4 is started at the time t0 and the detection temperature becomes higher than or equal to the temperature threshold value at a time t1. Thus, at the time t1 the upper limit of the duty ratio is lowered to reduce current flowing through the motor 4 and the FETs Q1 through Q6. As described above, since the upper limit of the duty ratio is lowered to reduce the current flowing through the motor 4 and the FETs Q1 through Q6, after the time t1 the temperature rise under the drive control in the electric circular saw 1 becomes gentle in comparison with that under the drive control in the conventional work tool.

By further continuing the use of the electric circular saw 1, in a process from the time t1 to the time t2 at which the work is finished, each time the detection temperature exceeds the temperature threshold value, the upper limit of the duty ratio is sequentially lowered. As a result, the current flowing through the motor 4 and the FETs Q1 through Q6 is further reduced. Accordingly, during a period of time from the time t1 to the time t2 a temperature rise degree under the drive control in the electric circular saw 1 is considerably smaller than that under the drive control in the conventional work tool.

Fig. 9 is a diagram illustrating variation of the rotation number of the motor, detection temperature, and the upper limit of the duty ratio depending on increase of load current. Note that, the variation of each of the above elements under the drive control in the electric circular saw 1 is indicated by a solid line. On the other hand, the variation of each of the above elements under the drive control in the conventional work tool is indicated by a dashed line.

As illustrated in Fig. 9, under the drive control in the conventional work tool, driving of the motor is started and a constant rotation number control is performed at a time 3, and then a constant rotation number is maintained up to a time t4. After the time t4, this maintenance of the constant rotation number control is impossible due to increase in the load current even though the duty ratio is set to 100%. Then, the rotation number is decreased in accordance with increase in the load current up to a time t6 at which the work is finished.

On the other hand, in the electric circular saw 1, driving of the motor 4 is started at the time 3 and then maintenance of the constant rotation number control becomes impossible at the time 4 due to increase in the load even though the duty ratio is set to 100%. Thus, after the time 4 the rotation number is decreased in accordance with increase in the load. Then, at a time t5 the detection temperature becomes higher than or equal to the temperature threshold value, and thus the upper limit of the duty ratio is lowered to a value which is lower than 100% so that current flowing through the motor 4 and the FETs Q1 through Q6 is reduced. In this case, although this lowering of the upper limit of the duty ratio causes a lowering of the rotation number, the temperature rise is suppressed because the load current temporarily decreases. Accordingly, the temperature rise in the electric circular saw 1 is gentle in comparison with that in the conventional work tool. By further continuing the use of the electric circular saw 1, in a process from the time t5 to a time t6 at which the work is finished, each time the detection temperature exceeds the temperature threshold value, the upper limit of the duty ratio is sequentially lowered. As a result, the load current flowing through the motor 4 and the FETs Q1 through Q6 is reduced and thus the temperature rise therein is further suppressed. Consequently, during a period of time from the time t5 to the time t6 a temperature rise degree under the drive control in the electric circular saw 1 is considerably smaller than that under the drive control in the conventional work tool.

In this way, in the electric circular saw 1 according to the first embodiment of the present invention, the upper limit of the duty ratio is set lower as the detection temperature becomes higher so that the current flowing through the motor 4 and the FETs Q1 through Q6 is reduced, thereby enabling effective suppression of the temperature rise therein. Note that, in order to clarify the fact that the upper limit of the duty ratio is lowered, the above-described variation that the upper limit is lowered step-by-step over the period of time that is more than twice as long as the one switching period is not depicted in Figs 8 and 9.

Next, an electric circular saw 200 as an example of a work tool according to a second embodiment of the present invention will be described while referring to Figs.10 through 12 in which like parts and control methods are designated by the same reference numerals as those shown in the first embodiment for omitting duplicating description. In the following description, only parts and control methods differing from those of the first embodiment will be mainly described.

As illustrated in Figs. 10 and 11, the main housing 21 of the electric circular saw 200 is provided with a control changeover switch 221C. Further, the main housing 21 accommodates therein a motor 204, a rotation number detection portion 204A, a temperature detection portion 205, and a driving control circuit 206. Also, the electric circular saw 200 has two kinds of controls as a drive control: a upper-limit setting control and a normal control. Details of the drive controls will be described later.

As illustrated in Fig. 10, on an upper surface of main housing 21 the control changeover switch 221C is disposed frontward of the target rotation number setting switch 21B. The control changeover switch 221C is adapted for changing over the drive control of the electric circular saw 200. The control changeover switch 221C is alternately switched ON/OFF each time the control changeover switch 221C is pushed by the user. The upper-limit setting control is selected as the drive control in a state where the control changeover switch 221C is ON, whereas the normal control is selected in a state where the control changeover switch 221C is OFF. The control changeover switch 221C is electrically connected to the driving control circuit 206 within the main housing 21, and outputs to the driving control circuit 206 a signal indicating one mode selected by a user from the upper-limit setting control and the normal control. Details of the upper-limit setting control and the normal control will be described later. The control changeover switch 221C is an example of "mode changeover means." The upper-limit setting control is an example of "first mode." The normal control is an example of "second mode."

As illustrated in Fig. 11, the motor 204 is an AC motor with a brush. The rotation number detection portion 204A is disposed in the vicinity of the motor 204. The rotation number detection portion 204A is, for example, a magnet sensor. The rotation number detection portion 204A detects the rotation number of the motor 204 and outputs the detection result to the driving control circuit 206. The temperature detection portion 205 is a thermosensitive element such as, for example, a thermistor and the like, and is provided in the vicinity of the motor 204 and a triac 206A (described later). The temperature detection portion 205 detects temperatures of both the motor 204 and the triac 206A, and outputs as a detection temperature a higher one of the detected temperatures of the motor 204 and the triac 206A to the driving control circuit 206. The temperature detection portion 205 is an example of "temperature detecting means."

The driving control circuit 206 is connected to both the commercial AC power source 500 and the motor 204 within the main housing 21, and includes the triac 206A, a shunt resistor 206B, a current detection circuit 206C, a target rotation number setting circuit 206D, a rotation number detection circuit 206E, a temperature detecting circuit 206F, a zero-cross detection circuit 206H, a power supply circuit 206G, and a microcomputer 206I.

The triac 206A is connected between the commercial AC power source 500 and the motor 204 via the shunt resistor 206B. The triac 206A is a switching element for alternating current. The triac 206A controls flowing and interruption of both a positive direction current and a negative direction current by being turned ON and OFF on the basis of a signal outputted from the microcomputer 206I. When the triac 206A is in an ON-state, the triac 206A allows current to flow to the motor 204 from the commercial AC power source 500. On the other hand, when the triac 206A is in an OFF-state, the triac 206A prohibit current from flowing to the motor 204 from the commercial AC power source 500. The shunt resistor 206B is used for detecting current. The triac 206A is an example of "switching element."

The current detection circuit 206C detects current flowing through the motor 204 on the basis of a voltage drop value across the shunt resistor 206B, and outputs the detection result to the microcomputer 206I. The target rotation number setting circuit 206D outputs to the microcomputer 206I a signal indicating the selected target rotation number set by the target rotation number setting switch 21B. The rotation number detection circuit 206E outputs to the microcomputer 206I the rotation number of the motor 204 inputted from the rotation number detection portion 204A. The temperature detecting circuit 206F outputs to the microcomputer 206I the detection temperature inputted from the temperature detection portion 205.

The power supply circuit 206G is connected to the commercial AC power source 500. The power supply circuit 206G converts voltage applied from the commercial AC power source 500 into a reference voltage Vcc, and outputs the reference voltage Vcc. The reference voltage Vcc is used as a drive power source for the microcomputer 206I and the like.

The zero-cross detection circuit 206H is connected between the commercial AC power source 500 and the microcomputer 206I. The zero-cross detection circuit 206H detects a zero-cross point at which the voltage of the commercial AC power source 500 becomes 0V, that is, a phase angle of the voltage of the commercial AC power source 500 becomes 0°, and outputs the detected zero-cross point to the microcomputer 206I.

Although not illustrated in the drawings, the microcomputer 206I includes a central processing unit (CPU) for outputting a drive signal on the basis of a processing program and data, a ROM for storing the processing program, control data, and various threshold values, and a RAM for temporarily storing data.

The microcomputer 206I is able to output the drive signal for switching the triac 206A, and performs a conduction angle control for changing a conduction angle of the triac 206A, i.e., for changing an ON-duration in one switching period of the triac 206A. The microcomputer 206I changes the conduction angle on the basis of a signal inputted from the target rotation number setting circuit 206D indicating the target rotation number, and switches ON/OFF the triac 206A at a high speed, thereby adjusting the power supply quantity to the motor 204 and thus controlling the rotation number thereof.

The microcomputer 206I compares the rotation number inputted from the rotation number detection circuit 206E with the target rotation number inputted from the target rotation number setting circuit 206D, and determines the power supply quantity to the motor 204 on the basis of the comparison result, thereby adjusting the power supply quantity to the motor 204 such that the rotation number of the motor 204 is brought in coincidence with the selected target rotation number. In this way, the microcomputer 206I performs a constant rotation number control such that the rotation number of the motor 4 is brought in coincidence with the target rotation number.

In addition, the microcomputer 206I is able to set an upper limit with respect to the ON-duration in one switching period of the triac 206A, i.e., an upper limit with respect to the conduction angle on the basis of the detection temperature inputted from the temperature detecting circuit 206F. When the drive control is set to the upper-limit setting control by the control changeover switch 221C, the microcomputer 206I sets the upper limit of the conduction angle on the basis of the detection temperature. In the upper-limit setting control, the constant rotation number control is performed by changing the conduction angle within a range not more than the set upper limit. That is, in the upper-limit setting control, if the conduction angle greater than the set upper limit is required for maintaining the constant rotation number control, the control to the conduction angle for not exceeding the set upper limit has higher priority than the maintenance of the constant rotation number control. Note that, in the normal control, a normal constant rotation number control under which the upper limit of the conduction angle is not set is performed. The microcomputer 206I is an example of "target rotation number setting means." Also, the microcomputer 206I is an example of "rotation number controlling means." Further, the microcomputer 206I is an example of "motor stop means."

Next, the drive control to the electric circular saw 200 will be described while referring to a flowchart depicted in Fig. 12. When the trigger 22A of the electric circular saw 200 is manipulated by the user, the microcomputer 206I is activated so that the drive control to the motor 204 is commenced (S301). Once the drive control is started, the microcomputer 206I sets the target rotation number (S302). The target rotation number setting circuit 206D outputs the target rotation number set by the user to the microcomputer 206I, and the latter sets the target rotation number on the basis of the outputted target rotation number. After setting the target rotation number, the microcomputer 206I detects temperatures of the motor 204 and the triac 206A (S303). This detection of temperatures is performed based on the above detection temperature inputted to the microcomputer 206I from the temperature detecting circuit 206F.

Subsequently, the microcomputer 206I determines whether or not the control changeover switch 221C is ON (S304). When the control changeover switch 221C is determined not to be ON (S304: No), the microcomputer 206I sets the upper limit of the conduction angle to 100% (180° when expressed by an angle), that is, the microcomputer 206I performs the normal control under which the upper limit with respect to the ON-duration in one switching period of the triac 206A is not set (S306). On the other hand, when the control changeover switch 221C is determined to be ON (S304: Yes), the microcomputer 206I sets the upper limit of the conduction angle on the basis of both the detection temperature and the upper-limit setting table, that is, the microcomputer 206I performs the upper-limit setting control under which the upper limit with respect to the ON-duration in one switching period of the triac 206A is set (S305).

Here, the control changeover switch 221C detects the rotation number of the motor 204 (S307). This detection of the rotation number of the motor 204 is performed on the basis of the rotation number inputted to the microcomputer 206I from the rotational number detection circuit 206E. Subsequently, the microcomputer 206I determines the conduction angle of the triac 206A (S308). When the control changeover switch 221C has been determined to be ON in Step 304, on the basis of the comparison result between the rotation number of the motor 204 and the target rotation number, the conduction angle is determined within a range not more than the upper limit set in Step 305. When the control changeover switch 221C has been determined not to be ON in Step 304, the upper limit with respect to the conduction angle is not set (that is, the conduction angle is changeable within a range from 0° to 180°) and the conduction angle is determined on the basis of the comparison result between the rotation number of the motor 204 and the target rotation number.

After the conduction angle is determined, the microcomputer 206I instructs the triac 206A to perform the switching actions (S309). In this case, the triac 206A is driven at the determined conduction angle. Subsequently, the microcomputer 206I determines whether or not the detection temperature is equal to or higher than 140°C (S310). When the detection temperature is determined to be equal to or higher than 140°C (S310: Yes), the microcomputer 206I stops the driving of the motor 204 by not outputting the drive signal to the triac 206A (S312).

On the other hand, when the detection temperature is determined not to be equal to or higher than 140°C (S310: No), the microcomputer 206I determines whether or not the trigger 22A is OFF (S311). When the trigger 22A is determined to be OFF (S311: Yes), the microcomputer 206I stops the motor 204 (S312). When the trigger 22A is determined not to be OFF (S311: No), the routine is returned to Step 302 and then the microcomputer 206I continues driving the motor 204 while repeatedly performing the processes in Steps 302 through 311 until the trigger 22A is turned off.

In this way, in the electric circular saw 200 according to the second embodiment of the present invention, by changing over ON and OFF of the control changeover switch 221C, the upper-limit setting control and the normal control can be switched. Accordingly, the user can select one of the upper-limit setting control and the normal control in accordance with working situations, and thus enhanced workability and convenience can be obtained.

The work tool according to the present invention is not limited to the above-described embodiments, but various modifications are conceivable without departing from the scope of claims. In the above-described embodiments, the electric circular saw 1 is employed as the work tool of the present invention, but is not limited to this. For example, the present invention may be applied to a work tool, such as a grinder, a miter saw, a hammer and the like, provided with a rotation number control portion adapted to control the motor such that the rotation number thereof is brought in coincidence with a target rotation number.

### [Reference Sings List]

1, 200: electric circular saw 1, 2: housing, 3: base, 4, 204: motor, 5, 205: temperature detection portion, 6: control substrate, 7: control circuit, 8: circular saw blade, 21: main housing, 21A: power cord, 21B: target rotational number setting switch, 21a: accommodating chamber, 22: handle portion, 22A: trigger, 23: saw cover, 23A: protective cover, 41: stator, 42: rotor, 42A: hall element 43: rotary shaft, 43A: fan, 61: rectifying smoothing circuit, 61A: diode bridge circuit 61B: smoothing capacitor 62: switching circuit 63: current detection resistor 64: control portion 64A, 206C: current detection circuit 64B: rotor position detection circuit 64C, 206D: target rotational number setting circuit 64D: control signal output portion 64E: arithmetic portion 204A: rotational number detection portion 206: driving control circuit 206A: triac 206B: shunt resistor 206E: rotational number detection circuit 206F: temperature detecting circuit 206G: power supply circuit 206H: zero-cross detection circuit 206I: microcomputer 221C: control changeover switch 500: commercial AC power source

## Claims

1. A work tool comprising:
a motor;
a switching element switchable between an ON-state and an OFF-state, the switching element allowing a current to flow through the motor during the ON-state, the switching element prohibiting a current from flowing through the motor during the OFF-state;
target rotation number setting means for setting a target rotation number of the motor;
rotation number controlling means for controlling the motor such that the rotation number thereof is brought in coincidence with the target rotation number by changing an ON-duration, during which the switching element is in the ON-state, in one switching period of the switching element; and
temperature detecting means for detecting at least one of a temperature of the motor and a temperature of the switching element,
wherein the rotation number controlling means is capable of setting an upper limit with respect to the ON-duration on the basis of the temperature detected by the temperature detecting means and changes the ON-duration within a range not more than the upper limit.

2. The work tool according to claim 1, wherein the rotation number controlling means lowers the upper limit as the detected temperature becomes higher.

3. The work tool according to claim 1 or 2, wherein the rotation number controlling means is further capable of setting a temperature threshold value, and
wherein the rotation number controlling means sets the upper limit to a first upper limit when the detected temperature is lower than the temperature threshold value, whereas the rotation number controlling means sets the upper limit to a second upper limit which is lower than the first upper limit when the detected temperature is equal to or higher than the temperature threshold value.

4. The work tool according to claim 1, wherein the rotation number controlling means is capable of setting a plurality of temperature threshold values, and
wherein the plurality of temperature threshold values are set such that the upper limit is lowered as the detected temperature becomes higher.

5. The work tool according to claim 4, wherein the rotation number controlling means is further capable of setting a lowering degree used when lowering the upper limit, and
wherein the rotation number controlling means sets the lowering degree to a first lowering degree when the target rotation number of the motor is set to a first rotation number, whereas the rotation number controlling means sets the lowering degree to a second lowering degree which is greater than the first lowering degree when the target rotation number is set to a second rotation number which is smaller than the first rotation number.

6. The work tool according to claim 4, wherein the rotation number controlling means sets the temperature threshold value to a first threshold value when the upper limit is set to a specific value and the target rotation number of the motor is set to a first rotation number, whereas the rotation number controlling means sets the temperature threshold value to a second threshold value which is lower than the first threshold value when the upper limit is set to the specific value and the target rotation number of the motor is set to a second rotation number which is smaller than the first rotation number.

7. The work tool according to claim 4, wherein the rotation number controlling means sets the upper limit to a first upper limit when the detected temperature is a specific temperature and the target rotation number of the motor is set to a first rotation number, whereas the rotation number controlling means sets the upper limit to a second upper limit which is lower than the first upper limit when the detected temperature is the specific temperature and the target rotation number of the motor is a second rotation number which is smaller than the first rotation number.

8. The work tool according to any one of claims 2 to 7, wherein the rotation number controlling means lowers the upper limit step-by-step over a period of time that is more than twice as long as the one switching period.

9. The work tool according to any one of claims 1 to 8, further comprising motor stop means for stopping driving of the motor when the detected temperature is equal to or higher than a predetermined temperature.

10. The work tool according to any one of claims 1 to 9, further comprising mode changeover means for changing over a drive control to the motor between a first mode under which the rotation number controlling means sets the upper limit and a second mode under which the rotation number controlling means does not set the upper limit.

11. The work tool according to any one of claims 1 to 10, further comprising a housing providing an accommodating chamber accommodating both the motor and the switching element,
wherein the temperature detecting means is accommodated in the accommodating chamber.
